# EUROPÄISCHE PATENTSCHRIFT

(11) **EP 0 615 875 B1**
(45) Veröffentlichungstag und Bekanntmachung des Hinweises auf die Patenterteilung: **13.11.1996**
(21) Anmeldenummer: 94103823.4
(22) Anmeldetag: 11.03.1994
(51) Int. Cl.: B60J 7/04, B60J 10/12

(54) **Verfahren zur Herstellung eines starren Deckels für ein Fahrzeugdach und nach dem Verfahren hergestellter Deckel**
Method for manufacturing a rigid lid for an automobile roof and lid manufactured by this method
Procédé pour fabriquer un volet rigide pour toit de véhicule et volet fabriqué d'après ce procédé

(30) Priorität: 15.03.1993 DE 4308214
(43) Veröffentlichungstag der Anmeldung: 21.09.1994
(73) Patentinhaber: METZELER Automotive Profiles GmbH, D-88131 Lindau (DE)
(72) Erfinder: Glagow, Klaus, D-88142 Wasserburg (DE); Brocke, Rolf, D-88239 Wangen (DE)
(74) Vertreter: Preissner, Nicolaus, Dipl.-Ing.

(56) Entgegenhaltungen:
- DE-A- 3 336 614
- DE-A- 3 506 009
- DE-A- 3 708 047

## Beschreibung

Die Erfindung bezieht sich auf ein Verfahren zur Herstellung eines starren Deckels für ein Fahrzeugdach mit einer umlaufenden Dichtung der Dachöffnung, mit einer Glasplatte, die mit einem im Randbereich untergelegten und seitlich überstehenden Grundrahmen verklebt wird sowie einer Spaltdichtung, die mit dem überstehenden Rand des Grundrahmens verbunden wird.

Ein derartiger Deckel und ein entsprechendes Herstellungsverfahren ist aus der DE-OS 36 39 894 bekannt. Dabei besteht dieser Deckel aus einer Vielzahl von Einzelteilen, die bei der Endmontage aufwendig zusammengefügt werden müssen. Hierbei ist zwischen der Glasplatte und der eigentlichen Dichtung noch ein umlaufendes T-förmiges Aluprofil aufgelegt, das zusätzlich gegen den überstehenden Rand des Grundrahmens verankert werden muß. Insgesamt sind mehrere Arbeitsgänge und Hilfsmittel erforderlich, um einen fertigen Deckel zu schaffen.

Der vorliegenden Erfindung liegt demgegenüber die Aufgabe zugrunde, ein Verfahren zur Herstellung eines solchen Deckels anzugeben, mit dem der Deckel sehr viel einfacher hergestellt und insbesondere aus weniger Einzelteilen montiert werden kann.

Zur Lösung dieser Aufgabe ist erfindungsgemäß vorgesehen, daß die spaltdichtung in Form eines koextrudierten Profils mit einem die Glasplatte und den Rand des Grundrahmens umfassenden Profilbereich aus einem Elastomer mit einer innenliegenden, U-förmigen Armierung und einem außenliegenden Profilbereich in Form einer Hohlkammerdichtung aus Moosgummi hergestellt, an den vier Ecken zu einem auf der hinteren Längsseite noch offenen Rahmen vorgebogen als eine Baueinheit angeliefert und bei der Montage auf den Rand der anderen Baueinheit aus Glasplatte und Grundrahmen seitlich aufgesteckt wird und die offenen Rahmenenden verklebt und verschraubt werden.

Damit liegen also für die Montage nur zwei vorgefertigte Bauteile vor, nämlich einmal die zunächst noch als offener Rahmen angelieferte Spaltdichtung und zum anderen die Glasplatte mit dem umlaufenden Grundrahmen, die dann auf einfache Weise miteinander verbunden werden können.

Zweckmäßigerweise erfolgt das Vorbiegen des offenen Rahmens mittels eines streckgebogenen bzw. Roll-Forming-Verfahrens.

Ferner ist es zweckmäßig, wenn der Elastomerbereich der Spaltdichtung aus EPDM mit einer Shore-A-Härte von etwa 70 hergestellt wird.

Bei einem nach diesem Verfahren hergestellten Deckel ist in Weiterbildung der Erfindung vorgesehen, daß die Spaltdichtung aus zwei Profilabschnitten A und B in Form eines sich über die Vorderkante des Deckels erstreckenden Abschnittes A mit einer sich seitlich über den Moosgummi-Profilbereich vom Elastomerteil her erstreckenden Dichtlippe und einer sich schräg nach unten und außen erstreckenden Dichtlippe vom Moosgummi-Profilbereich sowie in Form eines sich über den übrigen Bereich des Deckels erstreckenden Abschnittes B mit einer weggeschnittenen Dichtlippe im oberen Bereich besteht.

Dabei kann der Elastomerbereich des Profils drei seitlich abragende Stege aufweisen, von denen die beiden oberen Stege den Rand der Glasplatte und die beiden unteren Stege den Rand des Grundrahmens umfassen und eine innenliegende Armierung sich U-förmig vom oberen Steg über den vertikalen Profilhauptbereich in den unteren Steg erstreckt und den Rand von Glasplatte und Grundrahmen überdeckt.

Dabei besteht die Armierung zweckmäßigerweise aus Alu-Band, bzw. einem Stanzband mit innenliegenden Ausnehmungen.

Zusätzlich kann zwischen oberem und mittlerem Steg eine gegen den umlaufenden Rand der Glasplatte abdichtende Dichtlippe angeordnet sein.

Es ist aber auch möglich, daß der mittlere Steg selbst als Dichtlippe zum Rand der Glasplatte ausgebildet ist.

Zur Befestigung des Profils kann der Rand des Grundrahmens mittels eines aktivierbaren Klebers zwischen den beiden unteren Stegen des Elastomerprofilbereiches festgelegt sein.

Dabei kann der aktivierbare Kleber in einer seitlichen Ausnehmung des mittleren Steges eingebettet sein.

Als besonderen Schutz gegen ein Aufschlitzen der Randdichtung ist es zweckmäßig, wenn die Armierung im oberen Bereich zweilagig ausgebildet ist derart, daß die obere Armierung sich vom die Glasplatte am Rand überdeckenden Profilsteg mit einer angenähert Z-förmigen Abknickung bis in den Profilhauptbereich und die untere, U-förmig ausgebildete Armierung sich von unterhalb der Abknickung der oberen Armierung bis in den unteren Steg des Profils erstreckt.

Anhand einer schematischen Zeichnung sind Aufbau und Funktionsweise von Ausführungsbeispielen nach der Erfindung näher erläutert. Dabei zeigen:
- Fig. 1: eine Aufsicht auf den Deckel innerhalb der Dachöffnung,
- Fig. 2: einen Längsschnitt durch den Randbereich des Deckels an der Vorderkante mit einer Dichtung entsprechend der Schnittlinie II-II nach Fig. 1,
- Fig. 3: eine Aufsicht auf einen Abschnitt der Armierung,
- Fig. 4: eine gleichartige Dichtung wie nach Fig. 2 für die übrigen, umlaufenden Bereiche des Deckels entsprechend der Schnittlinie IV-IV nach Fig. 1,
- Fig. 5: einen Längsschnitt durch eine etwas abgewandelte Dichtung an der Vorderkante des Deckels,
- Fig. 6: einen Längsschnitt durch den Randbereich des Deckels an der Vorderkante für eine abgewandelte Dichtung mit einer Einbruchssicherung und zusätzlich geklebt,
- Fig.7: eine gleichartige Dichtung für den übrigen, umlaufenden Bereich des Deckels und
- Fig. 8: einen Längsschnitt durch den Dichtungsbereich einer Dichtung mit einer speziellen Art der Verklebung.

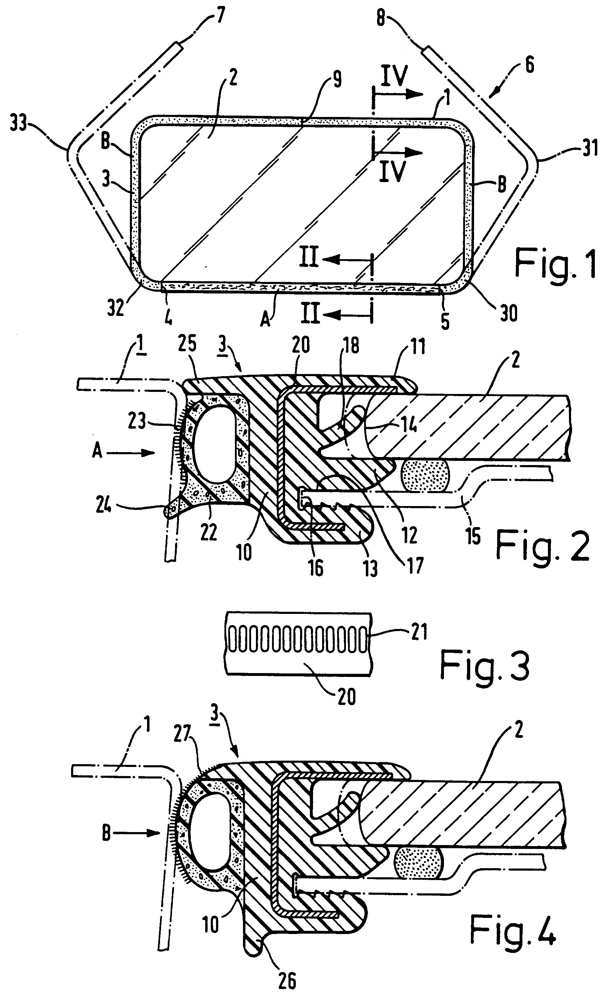

Nach der in Fig. 1 dargestellten Aufsicht auf ein Fahrzeugdach mit einer rechteckigen Dachöffnung 1 ist der im wesentlichen aus einer Glasplatte 2 bestehende Deckel allseitig von einer Spaltdichtung 3 zur Dachöffnung 1 umschlossen. Diese Spaltdichtung 3 kann dabei aus zwei unterschiedlichen Profilabschnitten, nämlich dem Profilabschnitt A an der zu öffnenden Vorderkante des Deckels und dem Profilabschnitt B, der die übrigen Bereiche des Deckels 2 umschließt, bestehen. Dabei weist der Profilabschnitt A zum Profilabschnitt B zwei Stoßstellen 4 und 5 auf, an denen die beiden Profilabschnitte A und B miteinander verklebt sind.

Wie aus der Zeichnung weiter ersichtlich ist, wird dieses Profil zunächst jedoch als an der Rückseite noch offener Rahmen 6 hergestellt, der jedoch an seinen entsprechenden Ecken bereits vorgebogen ist. Nach Aufschieben dieses offenen Profilrahmens 6 auf die Glasplatte 2 bzw. den untergelegten Rahmen werden dann die freien Enden 7 und 8 dieses offenen Rahmens 6 zusammengeführt und an der Trennstelle 9 miteinander verklebt und ggf. noch zusätzlich verschraubt.

In Fig. 2 ist ein Längsschnitt durch den Randbereich des Deckels entsprechend der Schnittlinie II-II nach Fig. 1 zusammen mit der aufgeschobenen Spaltdichtung 3 gezeigt. Diese Spaltdichtung 3 im Bereich des Profilabschnittes A zeigt zunächst einen vertikal verlaufenden Grundprofilbereich 10, von dem nach rechts drei Stege 11, 12 und 13 abragen, wobei zwischen den Stegen 11 und 12 der Rand 14 der Glasplatte 2 eingeklemmt ist, während zwischen den beiden unteren Stegen 12 und 13 der im Randbereich der Glasplatte 2 untergelegte Grundrahmen 15 mit seinem außenliegenden Rand 16 in einer entsprechenden Nut 17 festgelegt ist. Zusätzlich weist dieses Grundprofil 10 noch eine Dichtlippe 18 zwischen dem oberen und mittleren Steg 11 bzw. 12 auf, wobei diese Dichtlippe 18 gegen die Glasplatte 2 abdichtet und dabei einen gewissen Toleranzausgleich zwischen Grundprofil 10 und Glasplatte 2 bewirkt.

Dieses Grundprofil 10 ist zweckmäßigerweise aus einem Elastomer, beispielsweise in Form von EPDM mit einer Shore-A-Härte von 70 hergestellt.

Wesentlich ist, daß dieses Hauptprofil 10 noch eine U-förmige Armierung 20, beispielsweise aus dem in Fig. 3 gezeigten Stanzband mit innenliegenden Ausschnitten 21 aufweist. Diese Armierung 20 erstreckt sich vom Rand der Glasplatte 2 im oberen Steg 11 senkrecht durch das Hauptprofil 10 und endet im unteren Steg 13, um hier den Grundrahmen 15 mitzuumfassen.

Auf der Außenseite des Grundprofils 10 ist noch eine Hohlkammerdichtung 22 aus Moosgummi anextrudiert, die auf der Vorderseite eine Beflockung 23 und eine schräg nach unten gerichtete Dichtlippe 24 zum Abdichten gegenüber der Dachöffnung 1 aufweist. Darüberhinaus verläuft oberhalb dieser Moosgummidichtung 22 noch ein weiterer Dichtsteg 25 vom Hauptprofil 10 aus.

In Fig. 4 ist ein entsprechender Längsschnitt durch den Rand des Deckels für die Profilabschnitte B gezeigt. Dabei unterscheidet sich die Spaltdichtung 3 für den Profilbereich B von dem in Fig. 2 gezeigten Profilbereich A lediglich dadurch, daß das Hauptprofil 10 einen nach unten abragenden Steg 26 aufweist und der Dichtsteg 25 nach Fig. 2 hier entfällt, so daß sich jetzt die Beflockung 27 über die gesamte Vorderkante bis zur Oberseite des Hauptprofils 10 erstreckt.

Nach Fertigstellung dieser beiden Profilabschnitte A und B werden diese entsprechend Fig. 1 an ihren Stoßkanten 4 und 5 miteinander verklebt und anschließend wird der Rahmen 6 an seinen Eckpunkten 30, 31, 32 und 33 entsprechend der gezeigten Darstellung in Fig. 1 vorgebogen und dann als offener Rahmen angeliefert.

Bei der Herstellung der beiden Profilbereiche A und B ist es aber auch möglich, diese einstückig als durchlaufenden Strang herzustellen, wobei dann bei den Übergangsbereichen vom Profilbereich A zum Profilbereich B der überstehende Steg 25 nach Fig. 2 unmittelbar nach der Extrusion abgeschält wird, so daß sich dann eine Kontur entsprechend Fig. 4 ergibt.

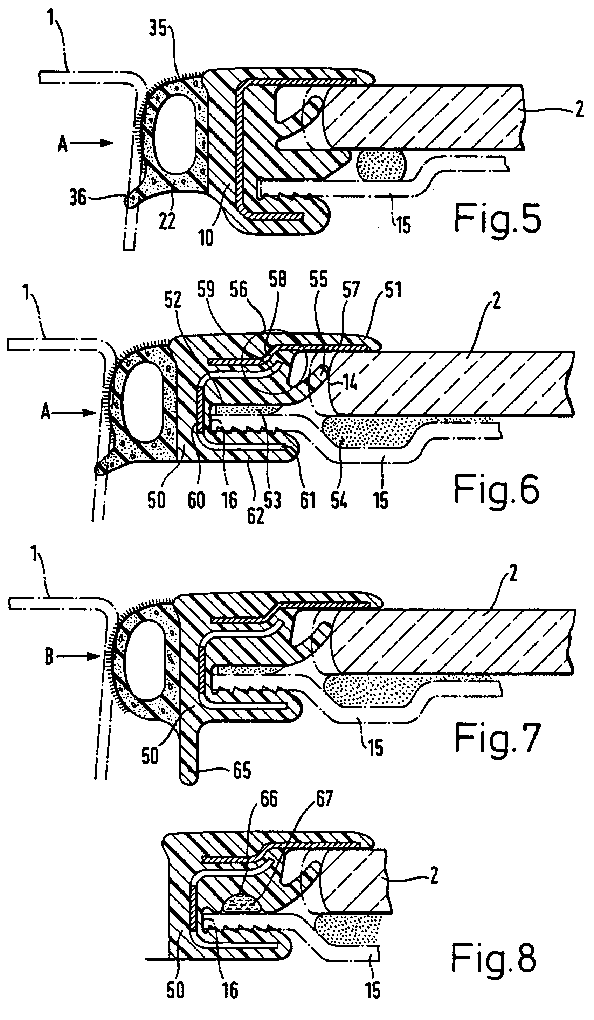

In Fig. 5 ist ein weiteres, sehr ähnliches Ausführungsbeispiel dargestellt, bei dem bereits im Profilabschnitt A ein oberer Dichtsteg oberhalb der Moosgummidichtung 22 fehlt und das Hauptprofil 10 mit seiner an das Moosgummiprofil 22 angrenzenden Flanke praktisch glatt bis oben durchgeführt ist, so daß die gesamte Seite des Hauptprofils 10 von der Moosgummidichtung 22 mit einer entsprechenden bis zum Hauptprofil 10 reichenden Beflockung 35 ausgebildet ist.

Damit ist es mit einer solchen Ausbildung ohne weiteres möglich, den gesamten Profilrahmen 6 einstückig zu fertigen, wobei dann lediglich die untere Lippe 36 an der Moosgummidichtung 22 für die Profilabschnitte B abgeschält werden muß.

Eine besondere Ausgestaltung ist in den Fig. 6 und 7 gezeigt. Hierbei weist das Hauptprofil 50 nur einen oberen, bis zur Glasplatte 2 ragenden Steg 51 auf, während im unteren Bereich ein Spalt 52 vorgesehen ist, in dem der Rand 16 des Grundrahmens 15 mittels einer aktivierbaren Kleberschicht 53 festgelegt ist. Glasplatte 2 und Grundrahmen 15 sind hierbei durch eine weitere Kleberschicht 54 miteinander verbunden. Vom mittleren Bereich des Grundprofils 50 ragt dann noch eine Dichtlippe 55 zum Rand 14 der Glasplatte 2, um hierdurch einen gewissen Toleranzausgleich zu bewirken.

Wesentlich ist hier aber die Gestaltung der Armierung, die praktisch als Einbruchsschutz zur Sicherung gegen Aufschneiden dient, wobei der entsprechende Bereich durch den Kreis 56 gekennzeichnet ist. Hiernach ist eine obere Armierung 57 vorgesehen, die sich im Steg 51 von der Oberseite der Glasplatte 2 nach hinten erstreckt und im Hauptprofilbereich 50 eine angenähert Z-förmige Abknickung 58 aufweist. Unterhalb dieser Abknickung 58 liegt der obere Schenkel 59 einer weiteren, U-förmigen Armierung 60, dessen anderer Schenkel 61 im Steg 62 unterhalb des eingespannten Randes 16 des Grundrahmens 15 endet.

Durch diese doppelte und abgeknickte Führung der beiden Armierungen 57 und 60 im oberen Bereich ist es praktisch nicht möglich, dieses Profil entlang der Oberseite der Glasplatte 2 aufzuschneiden.

In Fig. 7 ist das gleiche Profil nach Fig. 6 im Profilbereich B gezeigt, wobei hier vom Hauptprofilbereich 50 noch ein Dichtsteg 65 nach unten abragt.

Fig. 8 zeigt eine weitere Gestaltung dieser Dichtung, bei der der Rand 16 des Grundrahmens 15 auch auf der Oberseite vom Gummi des Hauptprofils 50 gehaltert wird. Hierbei ist lediglich eine Ausbuchtung 66 vorgesehen, in der der aktivierbare Kleber 67 eingebracht ist, um dann eine feste Haftung und Halterung des Grundrahmens 15 im Profil 50 zu bewirken.

Im übrigen wird dieses Profil entsprechend den Fig. 6 bis 8 in gleicher Weise weiterverarbeitet und gehandelt, wie das zu Fig. 1 beschrieben ist.

Insgesamt ergibt sich somit eine Spaltdichtung, die einfach zu einem fertigen Rahmen hergestellt werden kann und dann in einem Arbeitsgang auf das Bauteil, bestehend aus Glasplatte 2 und damit verbundenen Grundrahmen 15, aufgeschoben und verankert werden kann.

## Patentansprüche

1. Verfahren zur Herstellung eines starren Deckels für ein Fahrzeugdach mit einer umlaufenden Dichtung gegenüber der Dachöffnung, mit einer Glasplatte (2), die mit einem im Randbereich untergelegten und seitlich überstehenden Grundrahmen (15) verklebt wird sowie einer Spaltdichtung (3), die mit dem überstehenden Rand des Grundrahmens (15) verbunden wird, dadurch gekennzeichnet, daß die Spaltdichtung (3) in Form eines koextrudierten Profils mit einem die Glasplatte (2) und den Rand (16) des Grundrahmens (15) umfassenden Profilbereich (10) aus einem Elastomer mit einer innenliegenden, U-förmigen Armierung (20) und einem außenliegenden Profilbereich in Form einer Hohlkammerdichtung (22) aus Moosgummi hergstellt, an den vier Ecken (30 - 33) zu einem auf der hinteren Längsseite noch offenen Rahmen (6) vorgebogen als eine Baueinheit angeliefert und bei der Montage auf den Rand der anderen Baueinheit aus Glasplatte (2) und Grundrahmen (15) seitlich aufgesteckt wird und die offenen Rahmenenden (7, 8) verklebt und verschraubt werden.

2. Verfahren nach Anspruch 1, dadurch gekennzeichnet, daß das Vorbiegen des offenen Rahmens (6) mittels streckgebogenen bzw. Roll-Forming erfolgt.

3. Verfahren nach Anspruch 1, dadurch gekennzeichnet, daß der Elastomerbereich (10) aus EPDM mit einer Shore-A-Härte von etwa 70 hergestellt wird.

4. Nach dem Verfahren nach Anspruch 1 hergestellter Deckel, dadurch gekennzeichnet, daß die Spaltdichtung (3) aus zwei Profilabschnitten (A, B) in Form eines sich über die Vorderkante des Deckels (2) erstreckenden Abschnittes (A) mit einer sich seitlich über den Moosgummi-Profilbereich (22) vom Elastomerteil her erstreckenden Dichtlippe (25) und einer sich schräg nach unten und außen erstreckenden Dichtlippe (24) vom Moosgummi-Profilbereich (22) sowie in Form eines sich über den übrigen Bereich des Deckels erstreckenden Abschnittes (B) mit einer sich vom Elastomerbereich (10) nach unten erstreckenden Lippe (26) und einer weggeschnittenen Dichtlippe (25) im oberen Bereich besteht.

5. Deckel nach Anspruch 4, dadurch gekennzeichnet, daß die Spaltdichtung (3) mit den Profilabschnitten A und B einstückig fortlaufend extrudiert ist derart, daß die sich vom Elastomerteil (10) erstreckende Dichtlippe (25) des Profilabschnittes (A) in den seitlichen Bereichen des Profilabschnittes (B) unmittelbar nach der Extrusion abgeschält ist.

6. Deckel nach Anspruch 4, dadurch gekennzeichnet, daß der Elastomerbereich des Profils (10) drei seitlich abragende Stege (11, 12, 13) aufweist, von denen die oberen beiden (1, 12) den Rand (14) der Glasplatte (2) und die unteren beiden (12, 13) den Rand (16) des Grundrahmens (15) umfassen und eine innenliegende Armierung (20) sich U-förmig vom oberen Steg (11) über den vertikalen Profilhauptbereich (10) in den unteren Steg (13) erstreckt und den Rand von Glasplatte (2) und Grundrahmen (15) überdeckt.

7. Deckel nach Anspruch 6, dadurch gekennzeichnet, daß die Armierung (20) aus einem Stanzband mit innenliegenden Ausnehmungen (21) besteht.

8. Deckel nach Anspruch 6, dadurch gekennzeichnet, daß zwischen oberem und mittlerem Steg (11, 12) eine gegen den umlaufenden Rand (14) der Glasplatte (2) abdichtende Dichtlippe (18) angeordnet ist.

9. Deckel nach Anspruch 6, dadurch gekennzeichnet, daß der mittlere Steg als Dichtlippe (55) zum Rand (14) der Glasplatte (2) ausgebildet ist.

10. Deckel nach Anspruch 9, dadurch gekennzeichnet, daß der Rand (16) des Grundrahmens (15) mittels eines aktivierbaren Klebers (53) zwischen den beiden unteren Stegen (62, 55) festgelegt ist.

11. Deckel nach Anspruch 10, dadurch gekennzeichnet, daß der aktivierbare Kleber (67) in einer seitlichen Ausnehmung (66) des mittleren Steges (55) eingebettet ist.

12. Deckel nach Anspruch 6 und 9, dadurch gekennzeichnet, daß die Armierung im oberen Bereich abschnittsweise zweilagig ausgebildet ist derart, daß die obere Armierung (57) sich vom die Glasplatte (2) am Rand (14) überdeckenden Profilsteg (51) mit einer angenähert Z-förmigen Abknickung (58) bis in den Profilhauptbereich (50) und die untere, U-förmig ausgebildete Armierung (60) von unterhalb der Abknickung (58) der oberen Armierung (57) bis in den unteren Steg (62) erstrecken.

## Claims

1. A method of manufacturing a rigid lid for an automobile roof comprising a seal on all sides of the roof opening, a glass panel (2) bonded to a baseframe (15) provided with a backing in the edge portion and protruding on the sides, as well as a weatherstrip (3) connected to the protruding edge of the baseframe (15), characterized in that said weatherstrip (3) is produced in the form of a coextruded section including a section portion (10) of an elastomer incorporating on the inside a U-shaped strengthening (20) and an outer section portion in the form of a sponge rubber hollow cavity seal (22) surrounding said glass panel (2) and the edge of said baseframe (15) which is furnished prebent at the four corners (30 - 33) to form a frame (6) which is still open at the rear longitudinal side as a single unit and which on being fitted to the edge of the other unit comprising said glass panel (2) and said baseframe (15) is fitted to the sides, the open frame ends (7, 8) then being bonded and screwed in place.

2. The method as set forth in claim 1, characterized in that prebending of said open frame (6) is done by means of a stretch or roll forming method.

3. The method as set forth in claim 1, characterized in that the elastomer portion is produced from EPDM having a Shore A hardness of roughly 70.

4. A lid produced by the method as set forth in claim 1, characterized in that said weatherstrip (3) consists of two section lengths (A, B) in the form of a length (A) extending over the front edge of the lid (2) including a sealing lip (25) extending over the side of the sponge rubber section portion (22) from the elastomer part and a sealing lip (24) extending inclined downwardy and outwardly from the sponge rubber section portion (22) as well as in the form of a length (B) extending over the remaining portion of the lid including a lip (26) extending downwardly from the elastomer portion (10) and a sealing lip (25) with a cutaway in the upper portion.

5. The lid as set forth in claim 4, characterized in that said weatherstrip (3) is extruded continuously together with said section lengths A and B in one piece such that said sealing lip (25) of said section length (A) extending from said elastomer part (10) is peeled off in the side portions of section length (B) directly following extrusion.

6. The lid as set forth in claim 4, characterized in that said elastomer portion of said section (10) comprises three webs (11, 12, 13) protruding from the side, of which the two upper webs (1, 12) clasp the edge (14) of said glass panel (2) and the two lower webs (12, 13) clasp the edge (16) of said baseframe (15) and an internal strengthening (20) extends U-shaped from said upper web (11) over the vertical main portion of the section (10) into said lower web (13) and covers the edge of said glass panel (2) and baseframe (15).

7. The lid as set forth in claim 6, characterized in that said strengthening (20) consists of a stamped band including internal cutouts (21).

8. The lid as set forth in claim 6, characterized in that between said upper and middle web (11, 12) a sealing lip (18) sealing off the surrounding edge (14) of said glass panel (2) is arranged.

9. The lid as set forth in claim 6, characterized in that said middle web is configured as a sealing lip (55) for the edge (14) of said glass panel (2).

10. The lid as set forth in claim 9, characterized in that said edge (16) of said baseframe (15) is defined by means of an activatable adhesive (53) between said two lower webs (62, 55).

11. The lid as set forth in claim 10, characterized in that said activatable adhesive (67) is embedded in a side recess (66) of said middle web (55).

12. The lid as set forth in claim 6 and 9, characterized in that said strengthening in said upper portion is configured two-layer sectionwise such that said upper strengthening (57) extends from the section web (51) covering said glass panel (2) at the edge (14) with an approximate Z-shaped kink (58) up to said main portion of the section (50) and the lower, U-shaped strengthening (60) extends from below the kink (58) of said upper strengthening (57) up to the lower web (62).

## Revendications

1. Procédé pour réaliser un couvercle rigide pour un toit de véhicule avec un joint périphérique vis-à-vis de l'ouverture du toit, comprenant un panneau de verte (2), lequel est collé sur un cadre de base (15) posé en dessous dans la zone de bordure et dépassant latéralement, et comportant un joint de fente (3) qui est relié à la bordure en dépassement du cadre de base (15), caractérisé en ce que le joint de fente (3), réalisé sous la forme d'un profilé co-extrudé comportant une région de profilé en élastomère qui entoure le panneau de verte (2) et la bordure (16) du cadre de base (15) et qui comporte une armature intérieure (20) en forme de U, et une région de profilé extérieure sous forme d'un joint (22) à chambre creuse en caoutchouc mousse, est livré sous forme d'une unité structurelle en étant préalablement cintré au niveau des quatre coins (30-33) pour former un cadre (6) encore ouvert sur le côté longitudinal arrière, et qui est appliqué latéralement lors du montage sur la bordure de l'autre unité structurelle formée par le panneau de verte (2) et le cadre de base (15), et les extrémités ouvertes du cadre (7, 8) sont collées et vissées.

2. Procédé selon la revendication 1, caractérisé en ce que le cintrage préalable du cadre ouvert (6) est réalisé par pliage-étirage ou par laminage ("roll-forming").

3. Procédé selon la revendication 1, caractérisé en ce que la région en élastomère (10) est réalisée en EPDM avec une dureté Shore-A d'environ 70.

4. Couvercle réalisé selon le procédé de la revendication 1, caractérisé en ce que le joint de fente (30) est constitué par deux tronçons de profilé (A, B) sous forme d'un tronçon (A) qui s'étend au-delà de l'arête avant du couvercle (2) avec une lèvre d'étanchéité (25) qui s'étend au-delà de la région de profilé en caoutchouc mousse (22) de la partie en élastomère et avec une lèvre d'étanchéité (24) qui s'étend vers le bas et vers l'extérieur en oblique depuis la région de profilé en caoutchouc mousse (22), ainsi que d'un tronçon (B) qui s'étend sur la région restante du couvercle, avec une lèvre (26) qui s'étend vers le bas depuis la région en élastomère (10), et avec une lèvre d'étanchéité découpée (25) dans la région supérieure.

5. Couvercle selon la revendication 4, caractérisé en ce que le joint de fente (3) est extrudé en continu d'une seule pièce avec les tronçons de profilé A et B, de telle manière que la lèvre d'étanchéité (25) qui s'étend depuis la partie en élastomère (10) du tronçon profilé (A) est pelée immédiatement après l'extrusion dans les zones latérales du tronçon de profilé (B).

6. Couvercle selon la revendication 4, caractérisé en ce que la région en élastomère du profilé (10) comprend trois barrettes (11, 12, 13) qui dépassent latéralement, parmi lesquelles les deux barrettes supérieures (11, 12) entourent la bordure (14) du panneau de verte (2) et les deux barrettes inférieures (12, 13) entourent la bordure (16) du cadre de base, et une armature intérieure (20) qui s'étend en forme de U depuis la barrette supérieure (11) via la zone principale verticale de profilé (10) jusque dans la barrette inférieure (13) et recouvre la bordure du panneau de verte (2) et du cadre de base (15).

7. Couvercle selon la revendication 6, caractérisé en ce que l'armature (20) est réalisée par une bande matricée avec des évidements intérieurs (21).

8. Couvercle selon la revendication 6, caractérisé en ce qu'une lèvre d'étanchéité (18) qui assure une étanchéité contre la bordure périphérique (14) du panneau de verte (2) est agencée entre la barrette supérieure et la barrette médiane (11, 12).

9. Couvercle selon la revendication 6, caractérisé en ce que la barrette médiane est réalisée sous forme d'une lèvre d'étanchéité (55) vis-à-vis de la bordure (14) du panneau de verte (2).

10. Couvercle selon la revendication 9, caractérisé en ce que la bordure (16) du cadre de base (15) est fixée entre les deux barrettes inférieures (62, 55) au moyen d'une colle (53) susceptible d'être activée.

11. Couvercle selon la revendication 10, caractérisé en ce que la colle (67) susceptible d'être activée est noyée dans un évidement latéral (66) de la barrette médiane (55).

12. Couvercle selon les revendications 6 et 9, caractérisé en ce que l'armature est réalisée à deux couches par tronçons dans la zone supérieure, de telle manière que l'armature supérieure (57) s'étend depuis la barrette de profilé (51) qui recouvre le panneau de verte (2) sur la bordure (14) avec un coudage (58) approximativement en forme de Z jusque dans la région principale de profilé (50), et l'armature inférieure (60) réalisée en forme de U s'étend depuis au-dessous du coudage (58) de l'armature supérieure (57) jusque dans la barrette inférieure (62).
